# EUROPEAN PATENT APPLICATION

(11) **EP 4 564 010 A1**
(43) Date of publication of application: **04.06.2025**
(21) Application number: 23846242.8
(22) Date of filing: 12.07.2023
(51) Int. Cl.: G01N 35/02, G01N 35/08, G01N 35/10, G01N 1/38

(54) **DISPENSING DEVICE, MIXING DEVICE, AND ANALYSIS DEVICE**

(30) Priority: 27.07.2022 JP 2022119730
(71) Applicant: The University of Tokyo, Bunkyo-ku, Tokyo 113-8654 (JP); Blue Industries Inc., Tokyo 130-0013 (JP)
(72) Inventor: KATO Hisanori, Tokyo 113-8654 (JP); SAITO Kenji, Tokyo 113-8654 (JP); KUJI Tomoaki, Tokyo 130-0013 (JP)
(74) Representative: Rings, Rolf
(86) International application number: PCT/JP2023/025746
(87) International publication number: WO 2024/024511

(57) **Abstract**

[Problem]

Provided is a dispensing device capable of improving the dispensing accuracy of a liquid sample.

[Solution]

A dispensing device 1 of an embodiment includes a cylindrical first flow passage 11, a pressing portion 12, and a press control unit 13. The first flow passage 11 is provided with a cylindrical main body portion 14, an opening portion 15 formed at the main body portion 14, and a lid portion 16 that closes the opening portion 15 and has higher flexibility than the main body portion 14. A liquid sample 7 flows down the first flow passage 11. The pressing portion 12 is for pressing the lid portion 16. The press control unit 13 controls the pressing of the pressing portion 12 against the lid portion 16. The first flow passage 11 is provided with a sample injection port 11a formed at an upstream side with respect to the lid portion 16, and an injection portion 19 for injecting a gas between the sample injection port 11a and the lid portion 16.

## Description

### TECHNICAL FIELD

The present invention relates to a dispensing device for dispensing a liquid sample, a mixing device, and an analysis device.

### BACKGROUND ART

Conventionally, as a technique for dispensing a sample, a dispensing device of Patent Document 1 is disclosed.

The dispensing device of Patent Document 1 employs a configuration including one ceramic heater that heats a part of a washing fluid filling a flow passage to generate a gas bubble and another ceramic heater that heats a washing fluid at a position closer to a syringe piston pump side than the heating position of the one ceramic heater to generate another gas bubble in a state where a layer of the washing fluid is interposed between the gas bubble and the other gas bubble.

Patent Document 1: JP-A-2005-3610

### DISCLOSURE OF THE INVENTION

### PROBLEMS TO BE SOLVED BY THE INVENTION

Incidentally, when a liquid sample is dispensed, the sample possibly remains inside a dispensing device. In the dispensing device of Patent Document 1, the sample remaining inside the dispensing device is washed with the washing fluid. However, there are circumstances in which the accuracy of dispensing the sample is low due to the sample remaining inside the dispensing device.

Therefore, the present invention has been made in consideration of the above-described circumstances, and it is an object of the present invention to provide a technique capable of improving the dispensing accuracy of a liquid sample.

### SOLUTIONS TO THE PROBLEMS

A dispensing device according to the present invention is a dispensing device for dispensing a liquid sample that includes a cylindrical first flow passage, a pressing portion, and a press control unit. The first flow passage is provided with a cylindrical main body portion, an opening portion formed at the main body portion, and a lid portion that closes the opening portion and has higher flexibility than the main body portion. A liquid first sample flows down the first flow passage. The pressing portion is for pressing the lid portion. The press control unit controls the pressing of the pressing portion against the lid portion. The first flow passage is provided with a sample injection port formed at an upstream side with respect to the lid portion, and an injection portion for injecting a gas between the sample injection port and the lid portion.

A mixing device according to the present invention is a mixing device that includes the dispensing device of the present invention and mixes the first sample and a second sample. The mixing device includes a second flow passage connected to the first flow passage at a downstream side with respect to the lid portion, a cylindrical third flow passage for making the second sample flow down, a joining portion at which the second flow passage joins the third flow passage, and a mixing flow passage for generating a mixed sample in which the first sample and the second sample are mixed at a downstream side with respect to the joining portion. At least any of the first sample and the second sample contains a magnetic insulator, and the mixing flow passage internally includes an electromagnet.

An analysis device according to the present invention is an analysis device that includes the mixing device of the present invention and analyzes the mixed sample. The analysis device includes an irradiation unit that irradiates the mixed sample adhered to the electromagnet with a light, a measurement unit that measures a reflected light of the light emitted by the irradiation unit, and a quantitative determination unit that determines a quantity of the mixed sample based on a result of the measurement by the measurement unit.

### EFFECTS OF THE INVENTION

The present invention can provide the technique capable of improving the dispensing accuracy of a liquid sample.

### BRIEF DESCRIPTION OF THE DRAWINGS

Fig. 1 is a schematic diagram illustrating an example of an analysis device of a first embodiment.
Fig. 2 is a diagram illustrating an example of a dispensing device of the first embodiment.
Fig. 3 is diagrams for describing an example of a dispensing method using the dispensing device of the first embodiment, Fig. 3A is a diagram illustrating a state before dispensing by an injection portion, and Fig. 3B is a diagram illustrating a state after dispensing by the injection portion.
Fig. 4 is diagrams for describing an example of the dispensing method using the dispensing device of the first embodiment, Fig. 4A is a diagram illustrating a state in which a lid portion is pressed by a pressing portion, and Fig. 4B is a diagram illustrating a state after the lid portion is pressed by the pressing portion.
Fig. 5 is diagrams for describing an example of a dispensing method using a dispensing device of a first modification, Fig. 5A is a diagram illustrating a state before a lid portion is pressed by a pressing portion, and Fig. 5B is a diagram illustrating a state in which the lid portion is pressed by the pressing portion.
Fig. 6 is a diagram illustrating an example of a dispensing device of a second modification.
Fig. 7 is a diagram illustrating an example of a mixing device of the first embodiment.
Fig. 8 is diagrams for describing a method for dispensing a liquid sample using a third flow passage, Fig. 8A is a diagram illustrating a state before dispensing by an injection portion, and Fig. 8B is a diagram illustrating a state after dispensing by the injection portion.
Fig. 9 is a diagram illustrating an example of a method for mixing a sample and another sample by the mixing device of the first embodiment.
Fig. 10 is a diagram illustrating an example of the method for mixing a sample and another sample by the mixing device of the first embodiment.
Fig. 11 is a diagram illustrating an example of the method for mixing a sample and another sample by the mixing device of the first embodiment.
Fig. 12 is a diagram illustrating an example of a mixing device of the first modification.
Fig. 13 is diagrams illustrating an example of a method for mixing a sample and another sample using the mixing device of the first modification, Fig. 13A is a diagram illustrating a state before a sample is adhered to an electromagnet, and Fig. 13B is a diagram illustrating a state after the sample is adhered to the electromagnet.
Fig. 14 is diagrams illustrating an example of the method for mixing a sample and another sample using the mixing device of the first modification, Fig. 14A is a diagram illustrating a state before the samples are mixed, and Fig. 14B is a diagram illustrating a state after the samples are mixed.
Fig. 15 is a diagram illustrating an analysis device in which a mixing device is provided with an irradiation unit and a measurement unit.
Fig. 16 is diagrams illustrating an example of a method for measuring the mixed sample using the analysis device of the first embodiment, Fig. 16A is a diagram illustrating a state before the sample is adhered to an electromagnet, and Fig. 16B is a diagram illustrating a state after the sample is adhered to the electromagnet.
Fig. 17 is diagrams illustrating an example of the method for measuring the mixed sample using the analysis device of the first embodiment, Fig. 17A is a diagram illustrating a state before a reagent is mixed, and Fig. 17B is a diagram illustrating a state after the reagent is mixed.
Fig. 18 is a diagram illustrating an example of the method for measuring the mixed sample using the analysis device of the first embodiment.

### DESCRIPTION OF PREFERRED EMBODIMENTS

The following describes embodiments of a dispensing device, a mixing device, and an analysis device to which the present invention is applied in detail with reference to the drawings.

### <First Embodiment: Analysis Device 100>

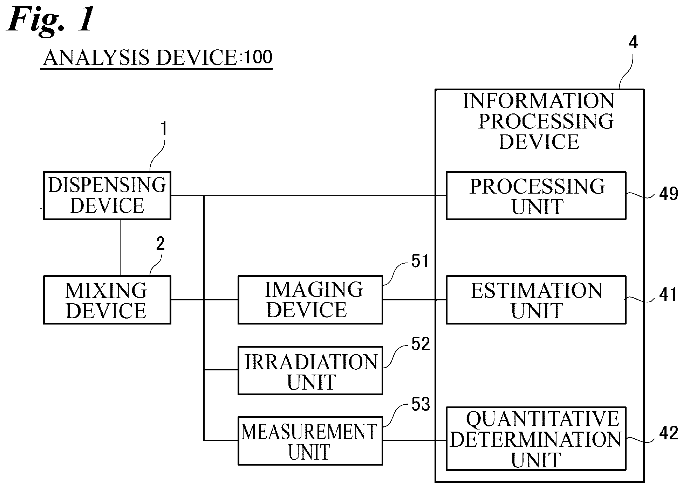

Fig. 1 is a schematic diagram illustrating an example of an analysis device 100 of a first embodiment. As illustrated in Fig. 1, the analysis device 100 includes a dispensing device 1, a mixing device 2, an information processing device 4, an imaging device 51, an irradiation unit 52, and a measurement unit 53. The analysis device 100 analyzes a sample, such as a liquid specimen.

### <Dispensing Device 1>

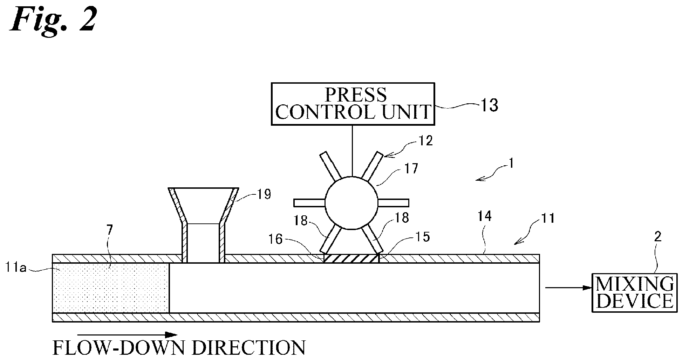

Fig. 2 is a diagram illustrating an example of the dispensing device 1 of the first embodiment. As illustrated in Fig. 2, the dispensing device 1 dispenses a liquid sample 7. The dispensing device 1 is provided with a first flow passage 11, a pressing portion 12, and a press control unit 13.

In the first flow passage 11, the liquid sample 7 flows down. The first flow passage 11 is provided with a sample injection port 11a at an upstream side in a flow-down direction of the sample 7. The sample injection port 11a is, for example, provided with a sample injection device (not illustrated), and the sample injection device can inject the sample 7 into the first flow passage 11. The sample injection device is connected to the information processing device 4, and an injection timing, a flow-down speed, a flow-down amount, and the like of the sample 7 injected into the first flow passage 11 can be controlled by a processing unit 49 of the information processing device 4.

The first flow passage 11 is provided with a cylindrical main body portion 14, an opening portion 15 formed at a sidewall of the main body portion 14, and a lid portion 16 that closes the opening portion 15 and has higher flexibility than the main body portion 14.

The material of the main body portion 14 is, for example, glass. The opening portion 15 is an opening formed in a circular shape, a rectangular shape, or the like at a part of the sidewall of the main body portion 14. The material of the lid portion 16 is, for example, soft plastic, such as polyethylene, having higher flexibility than the main body portion 14. The inner surface of the lid portion 16 is preferably formed to be flush with the inner surface of the main body portion 14.

The pressing portion 12 presses the lid portion 16 from the outside of the first flow passage 11. By pressing the lid portion 16 by the pressing portion 12, the lid portion 16 can be bent toward the inside of the first flow passage 11. The pressing portion 12 includes a plurality of blade portions 18 rotatable around a rotation shaft 17.

The press control unit 13 controls the pressing of the pressing portion 12 against the lid portion 16. For the press control unit 13, for example, a motor that rotates the rotation shaft 17 of the pressing portion 12 at constant speed is used. By rotating the rotation shaft 17 by the press control unit 13, the pressing of the blade portion 18 against the lid portion 16 and the separation of the blade portion 18 from the lid portion 16 can be alternately performed. The control of the pressing of the pressing portion 12 by the press control unit 13 can be controlled by the processing unit 49 of the information processing device 4.

The first flow passage 11 is provided with an injection portion 19 for injecting a gas, such as air, between the sample injection port 11a and the lid portion 16 at the sidewall. By injecting the gas from the injection portion 19, a sample flowing down from the sample injection port 11a can be dispensed at a predetermined amount. The injection portion 19 is, for example, provided with a gas injection device (not illustrated), and the gas injection device can inject the gas into the first flow passage 11. The gas injection device is connected to the information processing device 4, and an injection timing, an injection amount, and the like of the gas injected into the first flow passage 11 can be controlled by, for example, the processing unit 49 of the information processing device 4. The first flow passage 11 is connected to the mixing device 2 at a downstream side with respect to the lid portion 16.

### <Method for Dispensing Liquid Sample Using Dispensing Device 1>

Next, a method for dispensing a liquid sample using the dispensing device 1 is described.

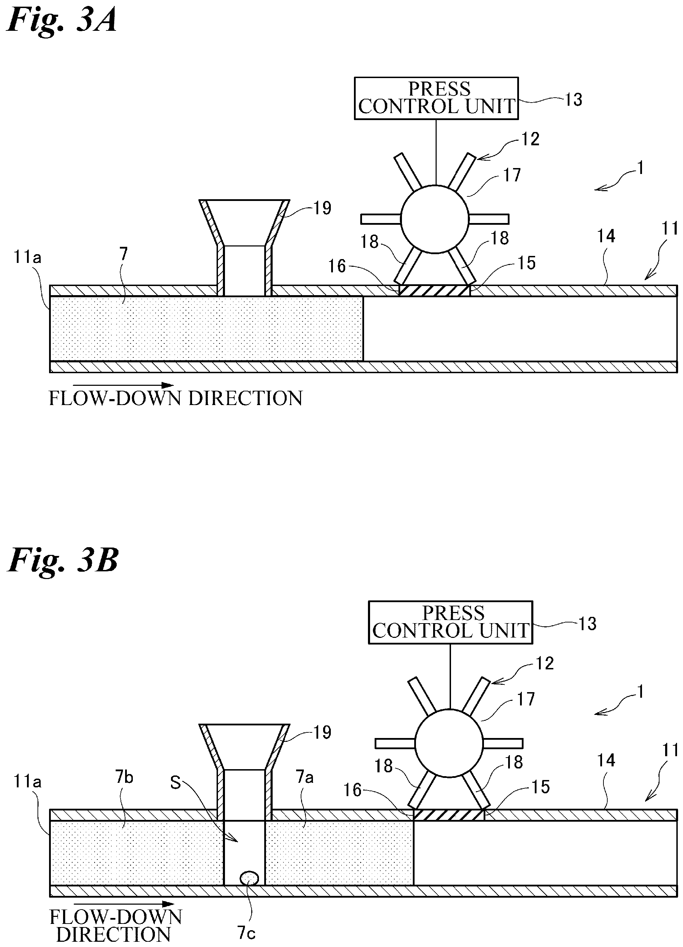

As illustrated in Fig. 3A, in the method for dispensing a sample using the dispensing device 1, the sample 7 is continuously injected into the first flow passage 11 from the sample injection port 11a.

As illustrated in Fig. 3B, a predetermined amount of an air S is injected from the injection portion 19. The sample 7 injected into the first flow passage 11 is divided into a sample 7a at a downstream side and a sample 7b at an upstream side with respect to the injection portion 19 by the air S. When the air S is injected from the injection portion 19, a sample 7c remains in the air S between the sample 7a at the downstream side and the sample 7b at the upstream side with respect to the injection portion 19 in some cases. In this case, the dispensing accuracy of the sample 7a at the downstream side with respect to the injection portion 19 is reduced by the amount of the sample 7c remaining in the air S.

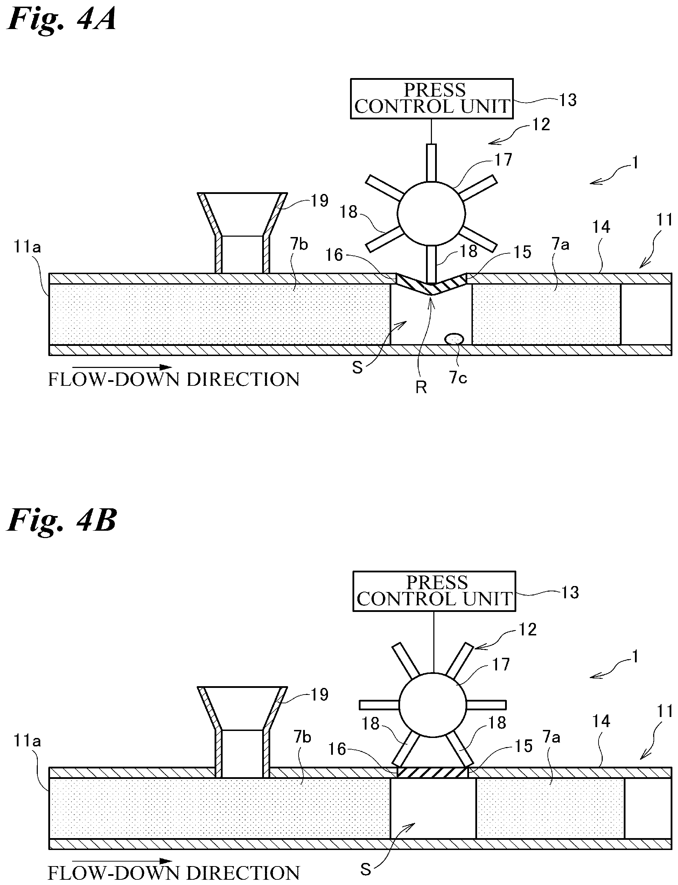

As illustrated in Fig. 4A, when the sample 7 is made to flow down and the air S flows down the lid portion 16, the lid portion 16 is pressed by the pressing portion 12. In detail, the press control unit 13 rotates the rotation shaft 17, thereby pressing the lid portion 16 with the blade portion 18 provided at the rotation shaft 17. This allows the lid portion 16 to be bent to the inside of the first flow passage 11. Bending the lid portion 16 causes the sample 7c remaining in the air S to be extruded to the downstream side and integrated with the sample 7a at the downstream side. Therefore, the dispensing accuracy of the sample 7a at the downstream side can be improved.

Then, as illustrated in Fig. 4B, the press control unit 13 further rotates the rotation shaft 17 to separate the blade portion 18 provided at the rotation shaft 17 from the lid portion 16.

By repeating the above-described procedure, the dispensing device 1 can sequentially dispense the sample 7.

According to the embodiment, the pressing portion 12 for pressing the lid portion 16 and the press control unit 13 that controls the pressing of the pressing portion 12 against the lid portion 16 are provided. This allows the pressing portion 12 to bend the lid portion 16 to the inside of the first flow passage 11 when the air S flows down the lid portion 16. Therefore, the sample 7c remaining in the air S is extruded to the downstream side and integrated with the sample 7a at the downstream side. Accordingly, the dispensing accuracy of the sample 7 can be improved.

According to the embodiment, the pressing portion 12 is provided with the plurality of blade portions 18 rotatable around the rotation shaft 17, and the press control unit 13 rotates the rotation shaft 17. This allows facilitating control of the pressing timing of the blade portion 18 against the lid portion 16. Therefore, the sample 7 can be dispensed with high efficiency.

According to the embodiment, the inner surface of the lid portion 16 is flush with the inner surface of the main body portion 14. This allows the sample 7 to smoothly flow down inside the first flow passage 11 even after the air S is injected into the first flow passage 11 by the injection portion 19. Therefore, the sample 7c remaining in the air S is less likely to remain in the first flow passage 11. Consequently, by bending the lid portion 16, the sample 7c remaining in the air S is smoothly extruded to the downstream side and integrated with the sample 7a at the downstream side. Therefore, the dispensing accuracy of the sample 7 can be further improved.

### <First Modification of Dispensing Device 1>

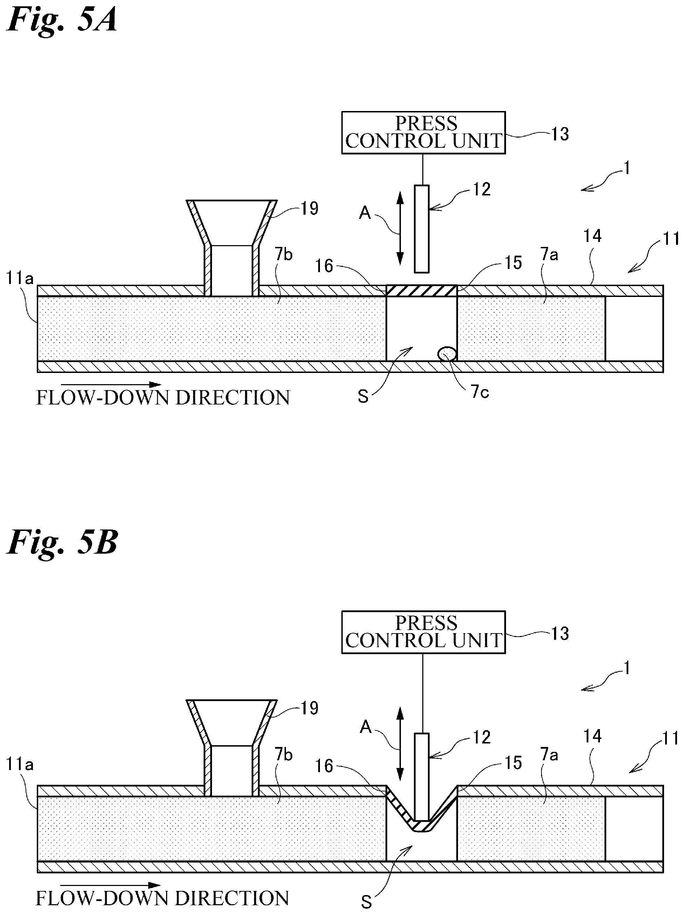

Next, a first modification of the dispensing device 1 is described. Fig. 5 is diagrams illustrating the dispensing device 1 of the first modification. As illustrated in Fig. 5A, in the dispensing device 1, the press control unit 13 allows the pressing portion 12 to move in directions intersecting with the flow-down direction of the sample 7 (directions of an arrow A in the diagram). This allows the pressing portion 12 to bend the lid portion 16 to the inside of the first flow passage 11 when the air S flows down the lid portion 16. Therefore, as illustrated in Fig. 5B, the sample 7c remaining in the air S is extruded to the downstream side and integrated with the sample 7a at the downstream side.

According to the embodiment, the press control unit 13 allows the pressing portion 12 to move in the directions intersecting with the flow-down direction of the sample 7. This allows easily bending the lid portion 16 to the inside of the first flow passage 11 when the pressing portion 12 presses the lid portion 16. By bending the lid portion 16, the sample 7c remaining in the air S is extruded to the downstream side and integrated with the sample 7a at the downstream side. Therefore, the dispensing accuracy of the sample 7a at the downstream side can be improved.

### <Second Modification of Dispensing Device 1>

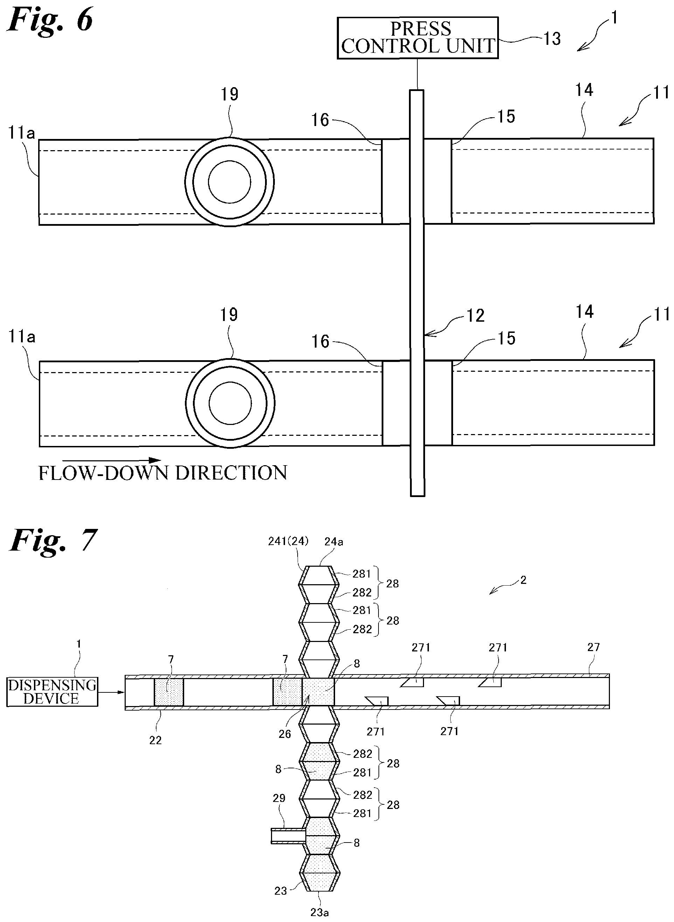

Next, a second modification of the dispensing device 1 is described. Fig. 6 is a diagram illustrating the dispensing device 1 of the second modification. In the dispensing device 1, a plurality of the first flow passages 11 are provided, and one pressing portion 12 can simultaneously press the lid portions 16 provided at the respective first flow passages 11.

The one pressing portion 12 is provided across a plurality of the lid portions 16, and can simultaneously press the plurality of lid portions 16. The pressing portion 12 allows, for example, the pressing portion 12 to move in directions intersecting with the flow-down direction of the sample 7 (a near side direction and a far side direction of the paper surface of Fig. 6).

According to the embodiment, the plurality of first flow passages 11 are provided, and one pressing portion 12 can simultaneously press the plurality of lid portions 16. This allows simultaneously dispensing the sample 7 flowing down the plurality of first flow passages 11. Therefore, the sample 7 can be dispensed with high efficiency.

### <Mixing Device 2>

Fig. 7 is a diagram illustrating an example of the mixing device 2 of the first embodiment. The mixing device 2 includes the dispensing device 1, and mixes the liquid sample 7 and a liquid sample 8. The mixing device 2 is connected to the first flow passage 11 of the dispensing device 1.

The mixing device 2 is provided with a second flow passage 22, a third flow passage 23, a fourth flow passage 24, a joining portion 26, and a mixing flow passage 27. The fourth flow passage 24 may be omitted. In the mixing device 2, a direction toward the mixing flow passage 27 is defined as the flow-down direction.

### <<Second Flow Passage 22>>

The second flow passage 22 is connected to the first flow passage 11 of the dispensing device 1 at the downstream side with respect to the lid portion 16. The second flow passage 22 may be integrally formed with the first flow passage 11. The second flow passage 22 may be formed separately from the first flow passage 11 and connected via a connecting pipe that connects the first flow passage 11 to the second flow passage 22. A plurality of the second flow passages 22 may be provided.

### <<Third Flow Passage 23>>

In the third flow passage 23, the sample 8 different from the sample 7 flows down. The third flow passage 23 is formed in a cylindrical shape. The third flow passage 23 is transparent. The third flow passage 23 is provided with a sample injection port 23a to inject the sample 8. The sample injection port 23a is, for example, provided with a sample injection device (not illustrated), and the sample injection device can inject the sample into the third flow passage 23. The sample injection device is connected to the information processing device 4, and an injection timing, a flow-down speed, a flow-down amount, and the like of the sample injected into the third flow passage 23 can be controlled by, for example, the processing unit 49 of the information processing device 4.

The third flow passage 23 is provided with an injection portion 29 for injecting a gas, such as air, at a sidewall at the downstream side with respect to the sample injection port 23a. By injecting the gas from the injection portion 29, the sample 8 flowing down from the sample injection port 23a can be dispensed at a predetermined amount. The injection portion 29 is, for example, provided with a gas injection device (not illustrated), and the gas injection device can inject a gas into the third flow passage 23. The gas injection device is connected to the information processing device 4, and an injection timing, an injection amount, and the like of the gas injected into the third flow passage 23 can be controlled by, for example, the processing unit 49 of the information processing device 4.

The third flow passage 23 is provided with the joining portion 26 for joining the second flow passage 22 at an end portion on the opposite side of the sample injection port 23a. A plurality of the third flow passages 23 may be provided.

The third flow passage 23 is provided with a plurality of double truncated cone-shaped portions 28, each of which is formed with a pair of an enlarged width portion 281 enlarged in width from the upstream side toward the downstream side of the flow-down direction and a reduced width portion 282 provided continuously with the enlarged width portion 281 at the downstream side and reduced in width from the upstream side toward the downstream side. The plurality of double truncated cone-shaped portions 28 are continuously provided. One double truncated cone-shaped portion 28 has an internal volume of, for example, 1 mm as a known value.

### <<Mixing Flow Passage 27>>

The mixing flow passage 27 generates a sample 9 in which the sample 7 and the sample 8 are mixed. The mixing flow passage 27 is provided at the downstream side of the flow-down direction with respect to the joining portion 26. The mixing flow passage 27 is formed in a cylindrical shape.

The mixing flow passage 27 is provided with a plurality of protrusions 271 on the inner surface. The protrusions 271 are formed to be inclined toward the upstream side. The protrusions 271 are provided at predetermined intervals along the mixing flow passage 27. The protrusions 271 are provided alternately on both sides of the inner surface across a center axis along the flow-down direction. The sample 7 and the sample 8 flowing down the mixing flow passage 27 are disturbed to meander inside the flow passage by the plurality of protrusions 271, thereby allowing efficiently mixing the sample 7 and the sample 8 to generate the sample 9.

### <<Fourth Flow Passage 24>>

In the fourth flow passage 24, a fluid different from the sample 7 and the sample 8 flows down. The fluid flowing down the fourth flow passage 24 is, for example, a gas, such as air, an oil, a washing fluid, and a reagent. The fourth flow passage 24 joins the second flow passage 22. The fourth flow passage 24 is formed in a cylindrical shape. The fourth flow passage 24 is transparent.

The fourth flow passage 24 is provided with an injection port 24a to inject the fluid. The injection port 24a is, for example, provided with an injection device (not illustrated), and the injection device can inject the fluid into the fourth flow passage 24. The injection device is connected to the information processing device 4, and an injection timing, a flow-down speed, a flow-down amount, and the like of the fluid injected into the fourth flow passage 24 can be controlled by, for example, the processing unit 49 of the information processing device 4.

The fourth flow passage 24 is provided with the joining portion 26 for joining the second flow passage 22 at an end portion on the opposite side of the injection port 24a.

The fourth flow passage 24 is provided with a plurality of double truncated cone-shaped portions 28, each of which is formed with a pair of an enlarged width portion 281 enlarged in width from the upstream side toward the downstream side of the flow-down direction and a reduced width portion 282 provided continuously with the enlarged width portion 281 at the downstream side and reduced in width from the upstream side toward the downstream side. The plurality of double truncated cone-shaped portions 28 are continuously provided. One double truncated cone-shaped portion 28 has an internal volume of, for example, 1 mm as a known value.

The fourth flow passage 24 includes a fourth flow passage 241 in which a fluid inactive to the sample 7 and the sample 8 flows down. As the inactive fluid, for example, air or an oil is used. This allows the inactive fluid to be interposed between the mixed samples 9. Accordingly, it can be avoided that the mixed samples 9 on both sides across the inactive fluid are mixed.

### (Method for Dispensing Liquid Sample Using Third Flow Passage 23)

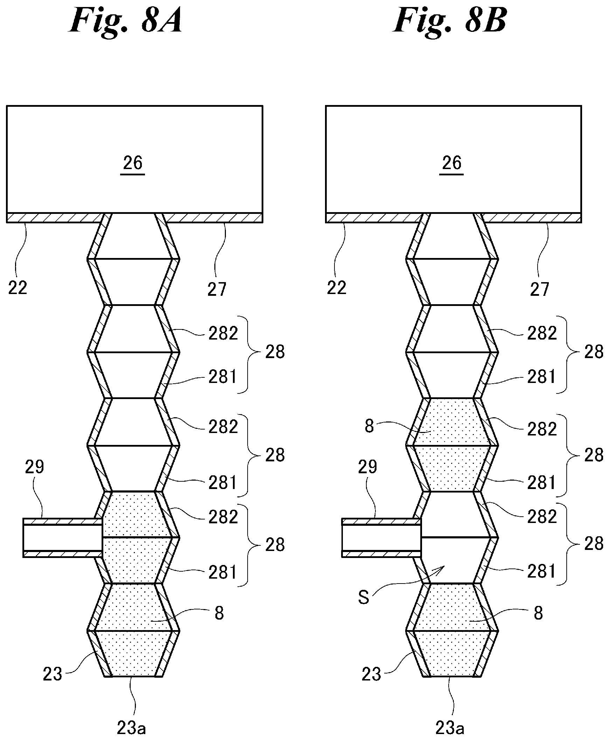

Next, a method for dispensing a liquid sample using the third flow passage 23 is described. Fig. 8 is diagrams for describing the method for dispensing a liquid sample using the third flow passage 23.

As illustrated in Fig. 8A, in the method for dispensing a sample using the third flow passage 23, the sample 8 is continuously injected into the third flow passage 23 from the sample injection port 23a. Then, by injecting a predetermined amount of the air S from the injection portion 29, the sample 8 injected into the third flow passage 23 is dispensed at a predetermined amount by the air S.

When the air S is injected from the injection portion 29, the sample 8 fills one or the plurality of double truncated cone-shaped portions 28 at the downstream side with respect to the injection portion 29. Since the internal volume of the double truncated cone-shaped portion 28 is already known, the volume of the sample 8 inside the double truncated cone-shaped portion 28 can be obtained from the appearance without adding a scale to the third flow passage 23. Therefore, the dispensing efficiency of the sample 8 can be improved.

By repeating the above-described procedure, the sample 8 can be sequentially dispensed by the third flow passage 23.

The mixing device 2 may further include the imaging device 51 and the information processing device 4. This allows facilitating an estimation of the volume of the sample 8 dispensed by the third flow passage 23.

### <Imaging Device 51>

The imaging device 51 takes an image of the double truncated cone-shaped portions 28 provided at the downstream side with respect to the injection portion 29. For the imaging device 51, for example, a camera is used.

### <Information Processing Device 4>

For the information processing device 4, for example, a personal computer is used. The information processing device 4 includes, for example, an estimation unit 41. Further, the information processing device 4 may further include an input/output unit that inputs and outputs various kinds of information and a storage unit that stores the various kinds of information.

The information processing device 4 preliminarily stores, for example, a relation between an image taken by the imaging device 51 and the volume of the sample 8 filling the double truncated cone-shaped portion 28.

### <Estimation Unit 41>

The estimation unit 41 estimates the volume of the sample inside the double truncated cone-shaped portion 28 based on the image taken by the imaging device 51. For example, the estimation unit 41 refers to the relation between the image taken by the imaging device 51 and the volume of the sample 8 inside the double truncated cone-shaped portion 28 stored in the information processing device 4, thereby estimating the volume of the sample 8 inside the double truncated cone-shaped portion 28 based on the image of the imaging device 51. This allows facilitating an estimation of the volume of the sample 8 in the double truncated cone-shaped portion 28.

### (Example of Method for Mixing Sample 7 and Sample 8 Using Mixing Device 2)

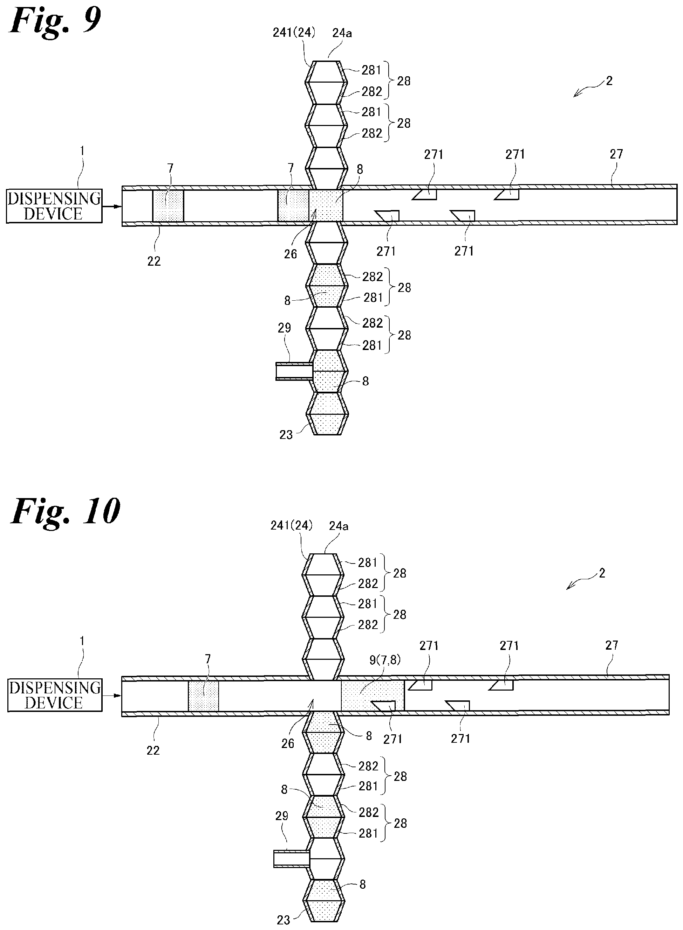

Next, an example of a method for mixing the sample 7 and the sample 8 using the mixing device 2 is described. Fig. 9 to Fig. 11 are diagrams illustrating an example of the method for mixing the sample 7 and the sample 8 using the mixing device 2 of the first embodiment.

As illustrated in Fig. 9, in the mixing method using the mixing device 2, the sample 8 is continuously injected into the third flow passage 23 from the sample injection port 23a. Then, by injecting a predetermined amount of air from the injection portion 29, the sample 8 injected into the third flow passage 23 is dispensed at a predetermined amount by the air. The dispensed sample 8 is made to flow down to the joining portion 26.

As illustrated in Fig. 10, the sample 7 dispensed by the dispensing device 1 is made to flow down from the first flow passage 11 to the joining portion 26 via the second flow passage 22. Then, the sample 7 and the sample 8 are made to flow down to the mixing flow passage 27. Subsequently, the inactive fluid, such as air, is injected into the fourth flow passage 241 from the injection port 24a, and the inactive fluid, such as air, is made to flow down to the joining portion 26.

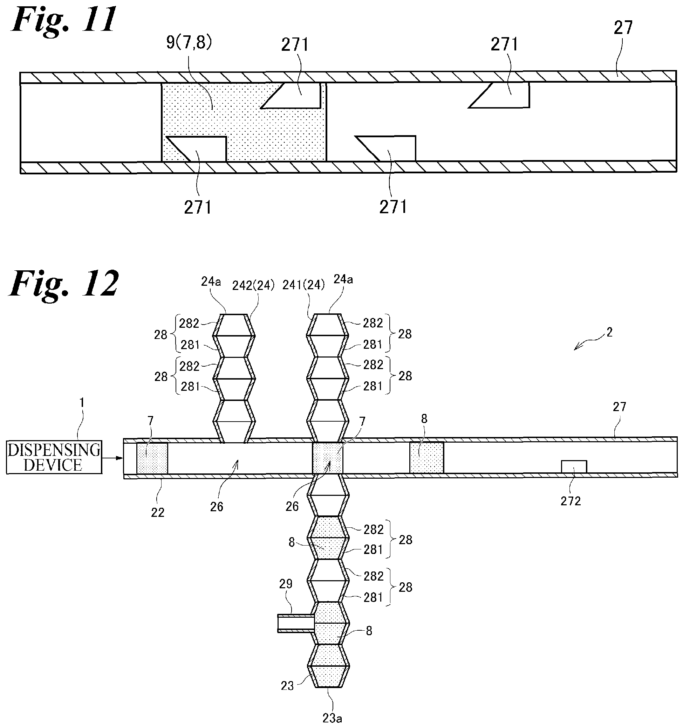

As illustrated in Fig. 11, the sample 7 and the sample 8 flowing down the mixing flow passage 27 are disturbed to meander inside the flow passage by the plurality of protrusions 271, thereby mixing the sample 7 and the sample 8. Thus, the sample 9 in which the sample 7 and the sample 8 are mixed is generated.

The inactive fluid flowing down to the joining portion 26 flows down the mixing flow passage 27. Then, the sample 8 dispensed to the joining portion 26 is made to flow down, and the above-described procedure is repeated. Thus, the sample 7 and the sample 8 can be sequentially mixed by the mixing device 2.

### <First Modification of Mixing Device 2>

A first modification of the mixing device 2 is described. Fig. 12 is a diagram illustrating an example of the mixing device 2 of the first modification. At least any of the sample 7 and the sample 8 contains a magnetic insulator.

The mixing flow passage 27 internally includes an electromagnet 272. Therefore, in a case where at least any of the sample 7 and the sample 8 contains a magnetic insulator, when the sample 7 and the sample 8 flow down the mixing flow passage 27, at least any of the sample 7 and the sample 8 can be adhered by the electromagnet 272. The electromagnet 272 provided inside the mixing flow passage 27 may be a magnet.

The electromagnet 272 is connected to a current control device (not illustrated). When the current control device makes a current flow, the electromagnet 272 can cause the sample containing a magnetic insulator to be adhered by the electromagnet 272. When the current control device does not make a current flow, the electromagnet 272 can cause the sample adhered by the electromagnet 272 to be detached from the electromagnet 272.

The fourth flow passage 24 further includes a fourth flow passage 242 in which a washing fluid for washing the electromagnet 272 flows down. For the washing fluid, for example, water is used. This allows washing impurities and the like adhering to the electromagnet 272. The fourth flow passage 242 may be provided with a joining portion 26 for joining the mixing flow passage 27 at the upstream side with respect to the electromagnet 272.

### (Example of Method for Mixing Sample 7 and Sample 8 Using Mixing Device 2)

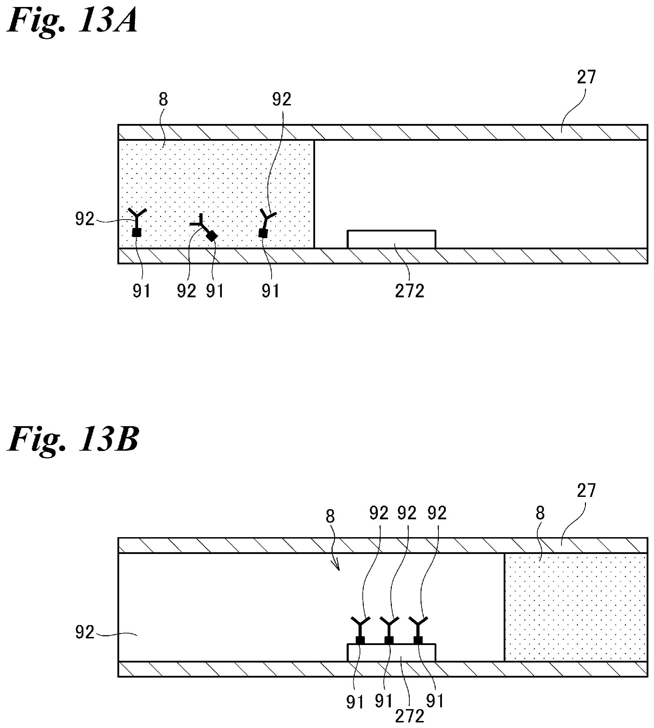

Next, an example of a method for mixing the sample 7 and the sample 8 using the mixing device 2 of the first modification is described. Fig. 13 is diagrams illustrating an example of the method for mixing the sample 7 and the sample 8 using the mixing device 2 of the first modification. In the following example, the sample 7 contains an antigen 93. The sample 8 contains an antibody 92 bound to a magnetic insulator 91 via a binder. In this case, when the sample 7 and the sample 8 are mixed, the sample 9 in which the antigen 93 is bound to the antibody 92 is generated. In the present invention, for example, the sample 7 may contain an enzyme, and the sample 8 may contain a substrate. In this case, when the sample 7 and the sample 8 are mixed, the sample 9 in which the enzyme is bound to the substrate is generated.

In the mixing method using the mixing device 2, the sample 8 is continuously injected into the third flow passage 23 from the sample injection port 23a. Then, by injecting a predetermined amount of air from the injection portion 29, the sample 8 injected into the third flow passage 23 is dispensed at a predetermined amount by the air. The dispensed sample 8 is made to flow down to the joining portion 26, and is made to flow down to the mixing flow passage 27.

As illustrated in Fig. 13A, the sample 8 contains the antibody 92 bound to the magnetic insulator 91 via the binder. A current is applied to the electromagnet 272, and the electromagnet 272 has a magnetic property. Therefore, as illustrated in Fig. 13B, when the sample 8 passes through the electromagnet 272, the magnetic insulator 91 contained in the sample 8 adheres to the electromagnet 272, and the sample 8 that does not adhere flows down to the downstream side with respect to the electromagnet 272.

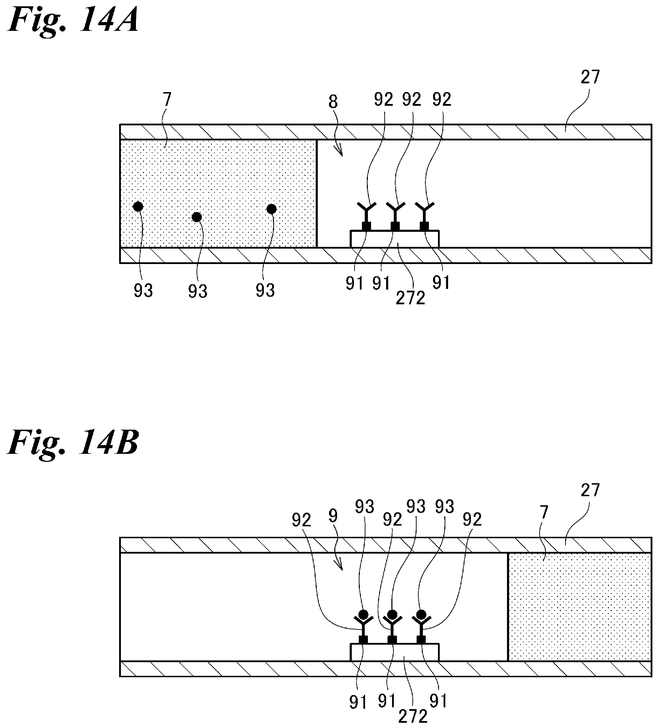

Then, as illustrated in Fig. 14A, the sample 7 dispensed by the dispensing device 1 is made to flow down from the first flow passage 11 to the joining portion 26 via the second flow passage 22, and is made to flow down to the mixing flow passage 27. The sample 7 contains the antigen 93 capable of binding to the antibody 92.

Therefore, as illustrated in Fig. 14B, when the sample 7 passes through the electromagnet 272, the antigen 93 contained in the sample 7 binds to the antibody 92 adhered to the electromagnet 272, and the sample 7 that does not bind flows down to the downstream side with respect to the electromagnet 272.

Thus, the sample 8 containing the magnetic insulator 91 is adhered by the electromagnet 272, and the sample 7 different from the adhered sample 8 is made to flow down to the electromagnet 272, thereby allowing the generation of the sample 9 in which the sample 7 and the sample 8 are mixed.

After the mixed sample 9 is generated, a washing fluid is made to flow down the fourth flow passage 242 from the injection port 24a to the joining portion 26. The washing fluid flowing down to the joining portion 26 flows down the mixing flow passage 27 and washes the electromagnet 272.

After the washing with the washing fluid, a measurement by the measurement unit 53 described later may be performed on the mixed sample 9. After the end of the measurement, the current to the electromagnet 272 is released, and the sample 9 is detached from the electromagnet 272. Then, it is only necessary to make the washing fluid flow down the mixing flow passage 27 again to wash the electromagnet 272.

Then, the sample 8 dispensed to the joining portion 26 is made to flow down, and the above-described procedure is repeated. Thus, the sample 7 and the sample 8 can be sequentially mixed by the mixing device 2.

According to the embodiment, the mixing flow passage 27 for generating the sample 9 in which the sample 7 and the sample 8 are mixed is provided at the downstream side with respect to the joining portion 26, at least any of the sample 7 and the sample 8 contains the magnetic insulator, and the mixing flow passage 27 internally includes the electromagnet 272. Accordingly, for example, the sample 8 containing the magnetic insulator 91 is adhered by the electromagnet 272, and the sample 7 different from the adhered sample 8 is made to flow down to the electromagnet 272, thereby allowing the generation of the sample 9 in which the sample 7 and the sample 8 are mixed.

According to the embodiment, the mixing flow passage 27 internally includes the electromagnet 272. This facilitates a recovery work of the sample 9 adhered to the electromagnet 272 after the generation of the sample 9 by mixing the sample 7 and the sample 8 in the mixing flow passage 27. Therefore, the generation of the sample 9 can be easily repeated.

According to the embodiment, the third flow passage 23 is provided with the plurality of double truncated cone-shaped portions 28, each of which is formed with a pair of the enlarged width portion 281 enlarged in width from the upstream side toward the downstream side and the reduced width portion 282 provided continuously with the enlarged width portion 281 at the downstream side and reduced in width from the upstream side toward the downstream side. Accordingly, the volume of the sample 8 inside the double truncated cone-shaped portion 28 can be obtained from the appearance without adding a scale to the third flow passage 23. Therefore, the dispensing efficiency of the sample 8 can be improved.

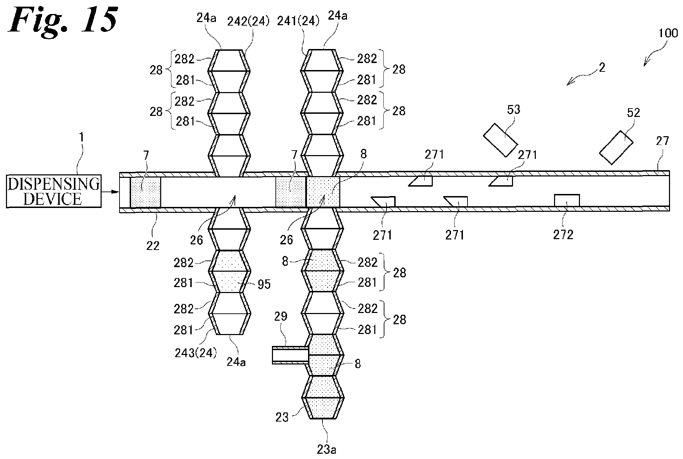

Next, the analysis device 100 is described. The analysis device 100 includes the dispensing device 1 and the mixing device 2, and analyzes the mixed sample 9. Fig. 15 is a diagram illustrating the analysis device 100 in which the mixing device 2 is provided with the irradiation unit 52 and the measurement unit 53. The mixing device 2 includes the irradiation unit 52 and the measurement unit 53. The electromagnet 272 is provided at the downstream side with respect to the protrusions 271.

### <Irradiation Unit 52>

The irradiation unit 52 irradiates the sample 9 adhered to the electromagnet 272 with a light. The irradiation unit 52 emits a light having a predetermined wavelength, for example, an ultraviolet light, an infrared light, and a visible light.

### <Measurement Unit 53>

For the measurement unit 53, a publicly known wavelength measurement device is used, and the measurement unit 53 measures a wavelength of a reflected light of the light emitted by the irradiation unit 52. For the measurement unit 53, a publicly known light intensity measurement device is used, and the measurement unit 53 may measure an intensity of a reflected light of the light emitted by the irradiation unit 52.

### <Information Processing Device 4>

The information processing device 4 includes, for example, a quantitative determination unit 42. The information processing device 4 preliminarily stores, for example, a relation between a wavelength measured by the measurement unit 53 and a content of the mixed sample 9. The information processing device 4 can control the light irradiation by the irradiation unit 52, the measurement by the measurement unit 53, and the like with the processing unit 49.

### <<Quantitative Determination Unit 42>>

The quantitative determination unit 42 determines a quantity of the content of the mixed sample 9 based on the wavelength measured by the measurement unit 53. For example, the quantitative determination unit 42 refers to the relation between the wavelength measured by the measurement unit 53 and the content of the mixed sample 9 stored in the information processing device 4, thereby determining the quantity of the content of the mixed sample 9 based on the wavelength measured by the measurement unit 53. This allows facilitating the quantitative determination of the content of the mixed sample 9. For example, the quantity of the content of the antibody, the antigen, the enzyme, the substrate, or the like contained in the sample 9 can be determined.

The fourth flow passage 24 may further include, for example, a fourth flow passage 243 in which a liquid reagent 95 reactive to the mixed sample 9 flows down. This allows mixing the reagent 95 with the mixed sample 9.

### (Example of Method for Measuring Mixed Sample 9 Using Analysis Device 100)

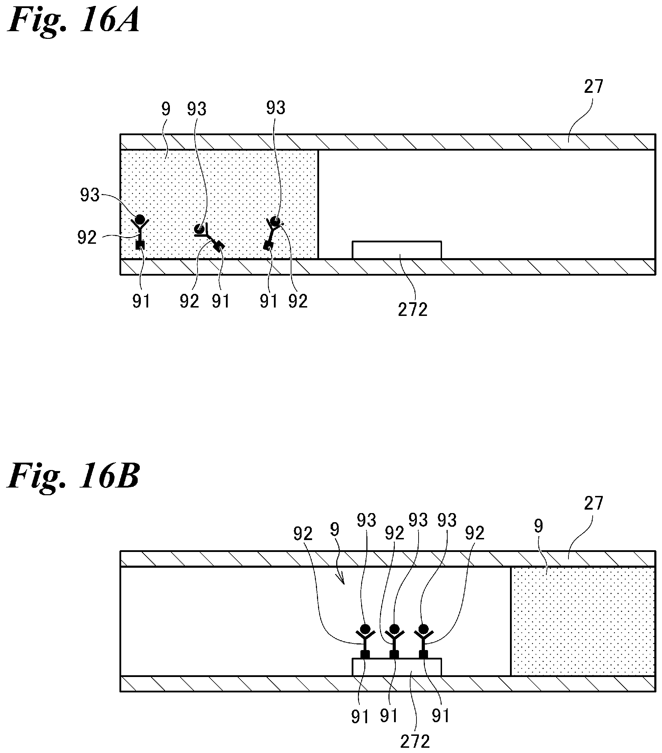

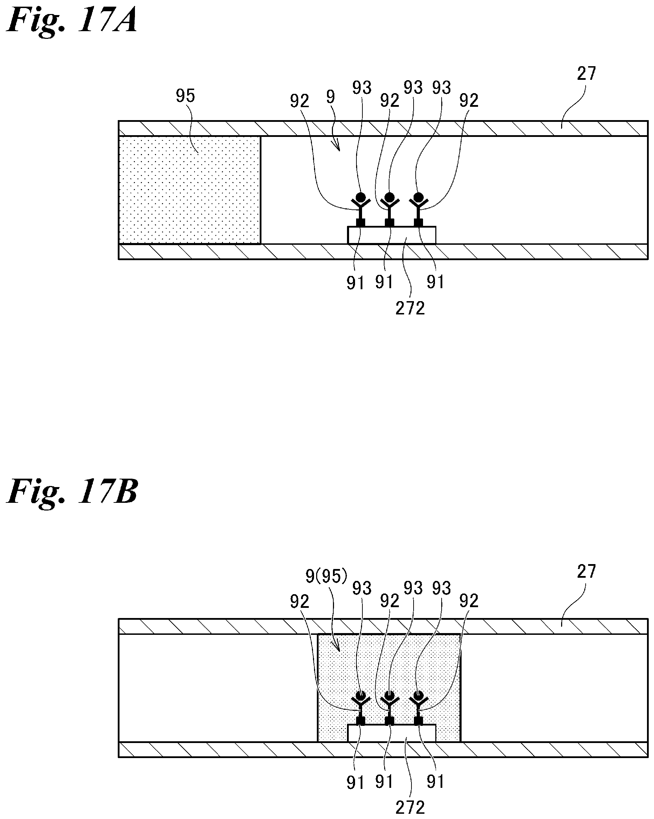

Next, an example of a method for measuring the mixed sample 9 using the analysis device 100 of the first embodiment is described. Fig. 16 and Fig. 17 are diagrams illustrating an example of the method for measuring the mixed sample 9 using the analysis device 100 of the first embodiment.

As illustrated in Fig. 16A, in the measuring method, the sample 7 and the sample 8 flowing down the mixing flow passage 27 are disturbed to meander inside the flow passage by the plurality of protrusions 271, thereby generating the sample 9 in which the sample 7 and the sample 8 are mixed.

At least any of the sample 7 and the sample 8 contains the magnetic insulator 91. In this case, the sample 9 in which the sample 7 and the sample 8 are mixed by the mixing flow passage 27 contains the magnetic insulator 91. For example, in a case where the sample 7 contains the antibody 92 bound to the antigen 93 and the sample 8 contains the magnetic insulator 91 and the binder, when the sample 7 and the sample 8 are mixed via the protrusions 271, the antibody 92 can be bound to the magnetic insulator 91 via the binder. As the binder, for example, streptavidin is used. As the magnetic insulator 91, for example, yttrium iron garnet is used.

The mixing flow passage 27 includes the electromagnet 272 at the downstream side with respect to the protrusion 271 on the inner surface. Therefore, in a case where the sample 9 in which the sample 7 and the sample 8 are mixed contains the magnetic insulator 91, when the sample 9 flows down the electromagnet 272, the sample 9 containing the magnetic insulator 91 is adhered by the electromagnet 272, and the sample 9 that does not adhere flows down to the downstream side with respect to the electromagnet 272.

Then, as illustrated in Fig. 17A, the reagent 95 is made to flow down from the fourth flow passage 243 to the joining portion 26, and is made to flow down to the mixing flow passage 27.

As illustrated in Fig. 17B, when the reagent 95 passes through the electromagnet 272, the reagent 95 is mixed with the sample 9 adhered to the electromagnet 272. The sample 9 mixed with the reagent 95 exhibits, for example, a color reaction.

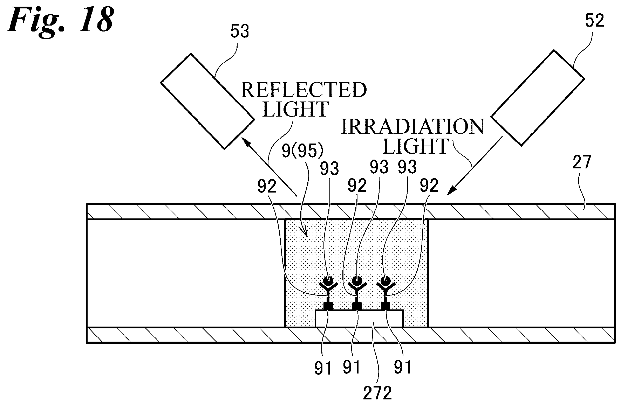

Then, as illustrated in Fig. 18, the irradiation unit 52 irradiates the sample 9 adhered to the electromagnet 272 with a light. Then, the measurement unit 53 measures the wavelength of a reflected light of the light emitted by the irradiation unit 52.

Then, for example, the quantitative determination unit 42 refers to the relation between the wavelength measured by the measurement unit 53 and the content of the mixed sample 9 stored in the information processing device 4, thereby determining the quantity of the content of the mixed sample 9 based on the wavelength measured by the measurement unit 53. This allows facilitating the quantitative determination of the content of the mixed sample 9.

According to the embodiment, the irradiation unit 52 that irradiates the sample 9 adhered to the electromagnet 272 with a light, the measurement unit 53 that measures the wavelength of a reflected light of the irradiated light, and the quantitative determination unit 42 that determines the quantity of the mixed sample 9 based on the wavelength measured by the measurement unit 53 are provided. This allows facilitating the quantitative determination of the content of the mixed sample 9. Accordingly, the quantitative determination of the sample 9 can be quickly performed.

While the embodiments of the present invention have been described above, these embodiments have been presented by way of example, and are not intended to limit the scope of the invention. These embodiments can be embodied in combination as necessary. Further, the present invention can be embodied in various novel embodiments in addition to the above-described embodiments. Therefore, for each of the above-described embodiments, various omissions, substitutions, and changes can be made without departing from the gist of the invention. Such novel embodiments and modifications fall within the scope and the gist of the invention and within the scope of the inventions described in the claims and their equivalents.

### DESCRIPTION OF REFERENCE SIGNS

- 100:: Analysis device
- 1:: Dispensing device
- 11:: First flow passage
- 11a:: Sample injection port
- 12:: Pressing portion
- 13:: Press control unit
- 14:: Main body portion
- 15:: Opening portion
- 16:: Lid portion
- 17:: Rotation shaft
- 18:: Blade portion
- 19:: Injection portion
- 2:: Mixing device
- 22:: Second flow passage
- 23:: Third flow passage
- 23a:: Sample injection port
- 24:: Fourth flow passage
- 24a:: Injection port
- 241:: Fourth flow passage
- 242:: Fourth flow passage
- 243:: Fourth flow passage
- 26:: Joining portion
- 27:: Mixing flow passage
- 271:: Protrusion
- 272:: Electromagnet
- 28:: Double truncated cone-shaped portion
- 281:: Enlarged width portion
- 282:: Reduced width portion
- 29:: Injection portion
- 4:: Information processing device
- 41:: Estimation unit
- 42:: Quantitative determination unit
- 49:: Processing unit
- 51:: Imaging device
- 52:: Irradiation unit
- 53:: Measurement unit
- 7:: Sample
- 8:: Sample
- 9:: Sample
- 91:: Magnetic insulator
- 92:: Antibody
- 93:: Antigen
- 95:: Reagent

## Claims

1. A dispensing device for dispensing a liquid sample, comprising:
a cylindrical first flow passage provided with a cylindrical main body portion, an opening portion formed at the main body portion, and a lid portion that closes the opening portion and has higher flexibility than the main body portion, a liquid first sample flowing down the first flow passage;
a pressing portion for pressing the lid portion; and
a press control unit that controls the pressing of the pressing portion against the lid portion, wherein
the first flow passage is provided with:
a sample injection port formed at an upstream side with respect to the lid portion; and
an injection portion for injecting a gas between the sample injection port and the lid portion.

2. The dispensing device according to claim 1, wherein
the pressing portion includes a plurality of blade portions rotatable around a rotation shaft, and
the press control unit rotates the rotation shaft.

3. The dispensing device according to claim 1, wherein
a plurality of the first flow passages are provided, and
one pressing portion is configured to simultaneously press a plurality of the lid portions.

4. A mixing device that includes the dispensing device according to claim 1 and mixes the first sample and a second sample, the mixing device comprising:
a second flow passage connected to the first flow passage at a downstream side with respect to the lid portion;
a cylindrical third flow passage for making the second sample flowing down;
a joining portion at which the second flow passage joins the third flow passage; and
a mixing flow passage for generating a mixed sample in which the first sample and the second sample are mixed at a downstream side with respect to the joining portion, wherein
at least any of the first sample and the second sample contains a magnetic insulator, and
the mixing flow passage internally includes an electromagnet.

5. The mixing device according to claim 4, wherein
the third flow passage is provided with a plurality of double truncated cone-shaped portions, and the double truncated cone-shaped portion is formed with a pair of an enlarged width portion enlarged in width from an upstream side toward a downstream side and a reduced width portion provided continuously with the enlarged width portion at the downstream side and reduced in width from the upstream side toward the downstream side.

6. An analysis device that includes the mixing device according to claim 4 and analyzes the mixed sample, the analysis device comprising:
an irradiation unit that irradiates the mixed sample adhered to the electromagnet with a light;
a measurement unit that measures a reflected light of the light emitted by the irradiation unit; and
a quantitative determination unit that determines a quantity of the mixed sample based on a result of the measurement by the measurement unit.
